# EUROPEAN PATENT APPLICATION

(11) **EP 3 591 575 A2**
(43) Date of publication of application: **08.01.2020**
(21) Application number: 19183746.7
(22) Date of filing: 01.07.2019
(51) Int. Cl.: G06K 9/00, G06K 9/46, G06K 9/62

(54) **DETERMINING PARKING SPACE AVAILABILITY**

(30) Priority: 01.07.2018 GB 201810804
(71) Applicant: Deepsine Ltd, London W1B 3HH (GB)
(72) Inventor: OLESANSKY, Stefan, London W1B 3HH (GB)
(74) Representative: Snipe, Benjamin Thomas Fletcher

(57) **Abstract**

A method for determining availability of parking spaces, which comprises: receiving image frames (200) from a camera (102), each image frame comprising a view of an area including at least one parking zone; determining (204), for each image frame, by a processing system including a trained neural network layer, location information identifying the location of each vehicle in at least a portion of the view, the determining including processing of the image frame by the trained neural network layer; and determining (208, 210), based on the location information and predetermined parking zone location information identifying the location of the at least one parking zone, availability information indicative of availability of parking spaces in the at least one parking zone. The determining the availability information is performed independently of any predefined capacity of the at least one parking zone.

## Description

### Field of the Invention

The invention relates to a method of determining availability of parking spaces using image frames from a camera feed. The invention also relates to a related apparatus and computer program.

### Background

Conventionally, the availability of spaces for cars in a car park is calculated by the number of predetermined spaces minus the number of cars in the car park. This calculation is limited by using sensors that monitor specific bays, either with a sensor over the parking bay or a sensor below in the ground at the parking bay. Providing such sensors is expensive and laborious, and such sensors may break or a battery run out.

Further, such calculations may lack accuracy. For example, if cars in a car park are parked to take up more spaces than are allocated for those cars, the availability of spaces is reduced below the predetermined capacity of the car park. If a large vehicle takes up several spaces, the number of spaces, according to the predetermined capacity, are also not available.

Also, if a car blocks entry to an otherwise empty or partially empty car park, the availability of spaces is zero but current systems cannot determine this. Conversely, if cars are parked closely, there may be more spaces available in a car park even though the number of parked cars equals the number according the predetermined capacity.

It is an object of the present invention to address at least the problem of determining availability of parking spaces.

### Summary of the Invention

According to a first aspect of the present invention, there is provided a method for determining availability of parking spaces, comprising: receiving image frames from a camera, each image frame comprising a view of an area including at least one parking zone; determining, for each image frame, by a processing system including a trained neural network layer (e.g. a CNN), location information identifying the location of each vehicle (e.g. car) in at least a portion of the view, the determining including processing of the image frame by the trained neural network layer; and determining, based on the location information and predetermined parking zone location information identifying the location of the at least one parking zone, availability information indicative of availability of parking spaces in the at least one parking zone.

The determining the availability information may be performed independently of any predefined capacity of the at least one parking zone.

The determining the availability information may comprise: determining space available in the at least one parking zone based on the parking zone location information and the location information for each vehicle; determining a number of vehicles of predetermined size that can be accommodated by the determined space, wherein the availability information is based at least on the number.

The method may further comprise determining the space available using dimension information for the view.

The method may further comprising automatically determining the parking zone location information.

The area may include at least one access zone, and the method may further comprise determining whether an object of predetermined size (e.g. a typical maximum car size) can access the or each parking space determined to be available in the at least one parking zone via the at least one access zone using access zone location information identifying the location of the at least access zone in the image data, wherein the availability information is based at least on whether the or each parking space is accessible.

The determining whether a vehicle can access the or each determined space may comprise determining whether a vehicle of predetermined size (e.g. a typical maximum car size plus distance on each side for manoeuvring) can move through the at least one access zone to the or each parking space determined to be available.

The method may further comprise automatically determining the at least one access zone location information.

The method may further comprise performing at least one action using the availability information.

The at least one action may comprise one of: controlling access (for example by controlling a gate) to a parking region including the at least one access zone and the at least one parking zone to prevent parking if the availability information indicates that no space is available; controlling an electronic sign configured to indicate whether parking spaces are available in the at least one parking zone; making the availability information available via a website or application.

According to a second aspect of the present invention, there is provided a computer program product including a neural network layer, embodied on a computer readable medium, which, when executed by a processing means, is configured to cause: determining, based on image frames received from a camera, each image frame comprising a view of an area including at least one parking zone, location information identifying the location of each vehicle (e.g. car) in at least a portion of the view, the determining including processing of the image frame by the trained neural network layer; and determining, based on predetermined parking zone location information identifying the location of the at least one parking zone, availability information indicative of availability of parking spaces in the at least one parking zone.

According to a third aspect of the present invention, there is provided apparatus comprising: a processing means; a memory means having computer program code stored thereon, wherein the processing means is configured, together with the memory means and the computer program code, to cause the apparatus to: receiving sequential image frames from a camera, each image frame comprising a view of an area including at least one parking zone; determining, for each image frame, by a processing system including a trained neural network (e.g. CNN) layer, location information identifying the location of each vehicle (e.g. car) in at least a portion of the view, the determining including processing of the image frame by the trained neural network layer; and determining, based on predetermined parking zone location information identifying the location of the at least one parking zone, availability information indicative of availability of parking spaces in the at least one parking zone.

According to a fourth aspect of the present invention, there is provided a method comprising determining identifying information for a vehicle without reference to the number plate. The method may further comprising: receiving at least one image of the vehicle; determining, based on the at least one image, the identifying information for the vehicle, preferably uniquely identifying information, using a processing means including a neural network, the determining including processing of the at least one image by the neural network, and storing the information; subsequently receiving information determined by the processing system using the neural network from an image of the vehicle; matching the identifying information and the subsequently received information.

The method may yet further comprise: determining a licence plate number for the vehicle using the at least one image; storing the licence plate number in association with the identifying information for the vehicle; based on the matching of the identifying information, determining the licence plate number.

According to other aspect of the present invention, there are provided methods, computer programs and apparatus in accordance with embodiments, as defined in the claims. Optional and/or preferred features and/or steps in accordance with embodiments are set out in the dependent claims.

### Brief Description of the Figures

Embodiments of the invention will now be described, by way of example only, with reference to the accompanying Figures, in which:
Figure 1 is a block diagram of a system in accordance with different embodiments of the invention;

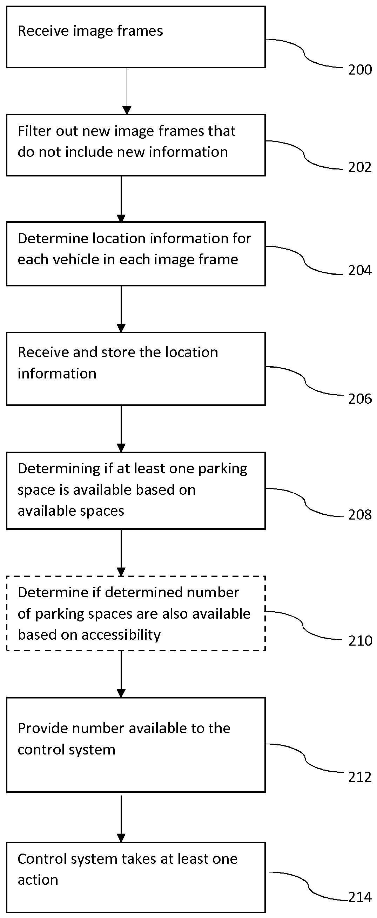

Figure 2 is a flow diagram showing steps in accordance with embodiments relating to determining availability of space in a parking region;
Figure 3 is a flow diagram showing steps in accordance with embodiments relating to vehicle identification;
Figure 4 is a block diagram illustrating components of a server on which embodiments of the invention may be implemented.

### Detailed Description of Embodiments

Embodiments of the invention relate to a parking space availability system in which availability of parking spaces in a parking area is determined. The availability is determined independently of any predefined capacity of the car park, if any such capacity is defined. For example, a car park may have a designated capacity for 20 cars, but have a capacity for 22 if the cars are parked closely together and/or are small, or a capacity for 16 if the cars are poorly parked and/or are large.

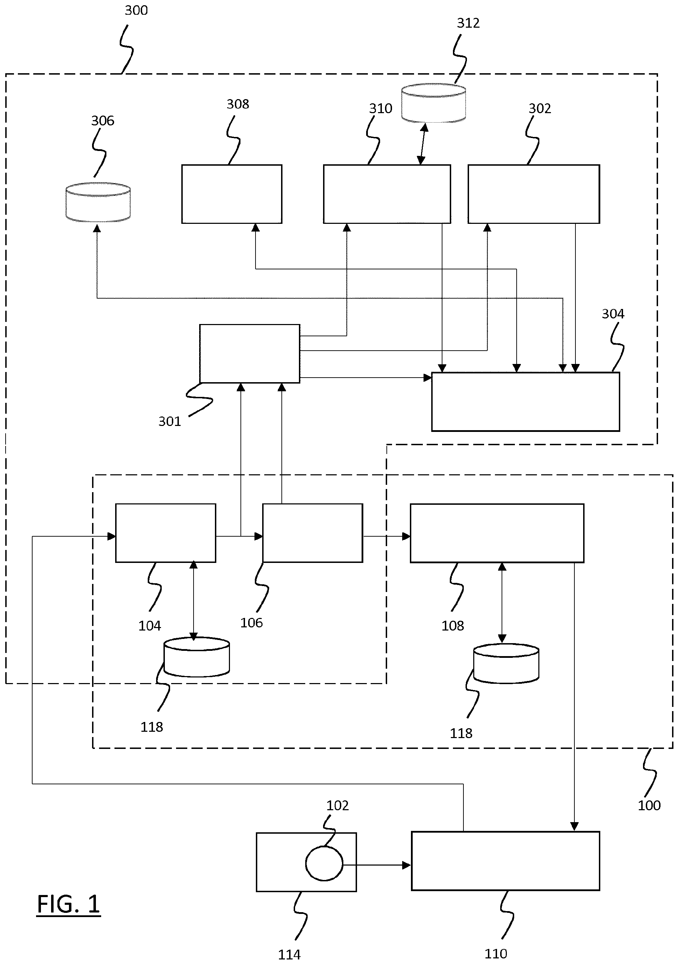

Referring to Figure 1, an availability determining system 100 comprises a stationary frame filter 104, a vehicle detection module 106 and an availability inference module 108. A control system 110 is operatively coupled to the availability determining system 100. The control system 110 is also configured to receive a video stream 112 from a video camera 114.

The video camera 114 is located to provide a fixed view of an area (the "viewing area"), in at least one portion of which is a parking region. The parking region is divided into at least one parking zone, in which vehicles may park, and at least one access zone, over which vehicles may drive to access the at least one parking zone. The or each parking zone is a contiguous area and the or each access zone is a contiguous area.

The video camera 114 is configured to provide consecutive image frames to the control system 110. The control system 110 is configured to provide the image frames to the stationary frame filter 104. The video camera 114 may provide the image frames at a rate of between one frame per second, for example. Alternatively, the video camera 114 may provide the image frames at a higher rate or a slower rate, for example one frame per minute. The camera 114 may be considered to be a video camera, but may instead be a camera configured for still images, that provides an image taken periodically, for example each minute.

Video may be temporarily stored at the camera 114 prior to processing, as compressed video, or at a device anywhere between the camera 114 and the stationary frame filter 104. For example, compressed video may be stored using an MP4 container, or H264 or H265 compression.

The stationary frame filter 104 is configured to determine if a received image is the same as the last image stored in an image store 116. This may be performed using conventional motion detecting algorithms. If so, the stationary frame filter 104 is configured to discard the received image, since this indicates that there has not been any movement of cars in the viewing area.

The stationary frame filter 104 may be configured to limit the determining to whether there has been a change to the parking region, rather than the whole viewing area. The location of the parking region in the viewing area may be stored by the stationary frame filter 104 in advance of operation of the system, in such a way that relevant locations in received images can be compared. The stationary frame filter 104 may then determine if there has been a change in the parking region of a stored image and a newly received image, and if there has not been, to discard the newly received image.

If the stationary frame filter 104 determines that a change has occurred, the stationary frame filter 104 is configured to store the most recently received image frame, in which a change has been detected, in the image store 116 as the most recent image. The purpose of storing this frame of the viewing area is so that subsequent images can be compared to it. Since stored image frames become redundant after a change has been determined in a subsequently received image frame, the stationary frame filter 104 is configured to delete images from the image frame store 116 after such a change has occurred. Alternatively, all image frames received from the feeds may be stored.

When a change has occurred, the stationary frame filter 104 provides the image frame to the vehicle detection module 106. The vehicle detection module 106 includes a convolutional neural network (CNN) trained for identifying vehicles in an image and outputting location information identifying the location of each vehicle in the image and an identifier to separately identify each of the identified vehicles in the image. While vehicles are referred to herein, the CNN may be trained to identify cars only, or cars and small vans, that is, vehicles that would typically park in the at least one parking zone or that may be permitted to park in the at least one parking zone in accordance with rules of the at least one parking zone. In this case, the vehicle detection module 106 is limited to identifying such vehicles. An object type identifier (for example "vehicle") may also be assigned to each identified vehicle. The object type identifier is inessential where the CNN is only trained to identify a single object type, that is "vehicles". The CNN can be trained using conventional processes and suitable training data sets, as will be understood by the person skilled in the art, or, alternatively, for identification of vehicles a suitably trained CNN can be obtained from a third party.

The vehicle detection module 106 is configured to provide the output data (that is, the location information for the identified vehicles, the object type identifier, the particular identified vehicle identifiers, and preferably an identifier of the camera or video feed that is received from the control system 100) to an availability inference module 108. The availability inference module 108 stores the data received from the vehicle detection module in a datastore 118.

The availability inference module 108 is configured with viewing area segmentation information in which the at least one parking zone is segmented from the rest of the viewing area. In some variant embodiments to be described in the following in which availability is also based on accessibility of the at least one parking zone, the viewing area segmentation information may include information separately identifying locations of the at least one parking zone and the at least one access zone from the rest of the viewing area.

The viewing area segmentation information may be provided to the availability inference module 108 manually, by input of an operator of the system. For example, an interface may be provided by which an operator may input on a display where the at least one parking zone is and, in embodiments, where the at least one access zone is. In this case, the availability inference module 108 is suitable configured with software to result in such an interface.

Alternatively, the viewing area may be automatically segmented. For example, a segmentation system may segment the viewing area into the at least one parking zone, the at least one access zone and the rest using outputs of the vehicle detection module 106. The segmentation system may be configured to segment by defining: the or each parking regions based on vehicles appearing in sequential image frames for long periods of time, for example at least 10 minutes; the or each access zone based on vehicles generally appearing for less than two minutes; and the rest of the viewing area by excluding the at least one parking region and the at least one access zone. The segmentation system may include a further trained CNN configured to process the vehicle location information and categorise it into the three categories, or two categories in embodiments where availability is not based on the at least one access zone. The segmenting system may comprise two further trained CNNs, one for determining boundaries of the at least one parking zone and the other for determining boundaries of the at least one access zone. Configuration of such further CNNs is known to persons skilled in the art, and suitably configured CNNs may be available for download from third parties.

The availability inference module 108 is configured to determine if, for each identified vehicle, the vehicle is parked or is moving by comparing the location information for each identified vehicle with previously received location information. Suitable motion detection algorithms are known in the art. If location information indicates that an identified vehicle has not moved between consecutive image frames or over a predetermined time period (for example has not moved since an image frame received more than two minutes earlier), that vehicle is determined to relate to a stationary vehicle, that is, parked. If the location information has changed, this indicates that the vehicle is moving. The availability inference module 108 stores location information for previously received frames for this purpose.

The availability inference module 108 is then configured to determine whether any parking spaces are available. This is done by first determining location information for an available area of the at least one parking zone, and then determining a number of parking spaces, if any, that are available in the available area of the at least one parking zone. The number of parking spaces may be determined based on the number of parking spaces of predetermined and stored dimensions that fit completely within the available area in a non-overlapping manner. For example, in the UK a recommended standard parking bay size is 2.4m by 4.8m and these dimensions may be used. The availability inference module 108 is configured to determine the available area of the at least one parking zone by consideration of the whole at least one parking zone and excluding from that area the parts covered by vehicles, which are identifiable from the location information of the vehicles. The availability inference module 108 may be alternatively configured to use alternative dimensions for parking bay sizes in determining the number of spaces available.

The availability inference module 108 includes an algorithm configured to determine the number of available parking spaces automatically. As will be appreciated, the camera has a view angle and the distance between the camera and objects/areas in the viewing area is not known. The availability inference module 108 may store dimension information for the viewing area that takes into consideration the view angle.

Dimension information may be known by reference to objects in the viewing area that are known to have particular dimensions. A plan of the viewing area (e.g. a frame without vehicles in) may be processed by an object identification module comprising a yet further neural network, such as a CNN, configured to identify predetermined objects that typically appear in the viewing area and whose dimensions are known. For example, an object identification module may be configured to process the plan to segment curbs, thereby to generate location information in the viewing area on curbs. Curbs have a known width, enabling dimensions in the viewing area to be determined. The stationary object identification module may also be configured to segment lamp posts, thereby to generate location information in the viewing area on identified lamp posts. Diameter of lamp posts can be known. The availability inference module 108 may determine lengths and widths for available parking area in the viewing area based on dimension information for objects in the viewing area. As will be appreciated, the availability inference module may be configured to determine availability using dimension and/or angle information , based on that the viewing area in the image frame is a two-dimensional plane, or in three-dimensions.

As will be known to the skilled person, there are various ways in which the dimensions in the plan (and thus the viewing area) may be determined. In another example, the availability inference module 108 may be configured, in a set up phase, to use information on dimensions of identified vehicles to determine dimensions in the viewing area. Determining of vehicle models is described in relation to other embodiments described below. Dimensions of many models of vehicles can be known and the availability inference module 108 can be preconfigured with them. Features and steps in such embodiments may be used in the setup phase to determine two-dimensional lengths and widths of the viewing area also in view of the angle of the camera 114.

The availability inference module 108 then outputs the number of available parking spaces to the control system 110. The control system 110 is configured to store the number of available spaces, together with a timestamp corresponding to the image frame. The control system 110 may be operatively coupled to a sign with a digital display on a road near the parking zone. The control system 110 may be configured to cause the display to indicate to passing drivers that parking spaces are available in the parking zone, and optionally the number of spaces available.

As well as determining number of parking spaces available in the at least one parking zone, in preferred embodiments the availability inference module 104 is configured to also determine availability based on whether those parking spaces can be accessed via the at least one access zone. In this case, the availability inference module 108 is configured to apply a transferability algorithm to determine whether a vehicle can be driven from a predetermined entrance to the at least one parking region to each of the available spaces.

The availability inference module 108 is configured with assumed predetermined dimensions of a car. On the basis that a maximum length of most cars is less than 4.80m and a maximum width is less than 2m, the availability inference module 108 is configured to use the transferability algorithm to determine whether a rectangle of dimensions 2m by 4.8m can move lengthwise from the entrance to the available one or more spaces in the at least one parking zone. In particular, the availability inference module is configured to determine whether any identified vehicles in the at least one access zone are parked, thereby blocking access to available spaces, or are moving. As will be appreciated by the skilled person, conventional motion detection algorithms may be used to detect this for each vehicle identified by the vehicle detection module 106, for example by comparing location information for an identified vehicle with location information in a frame received a predetermined time period earlier, for example a frame from two minutes earlier. If the location information matches, the identified vehicle is determined to be stationary. In this case, access to any or all available spaces may be determined to be blocked, and the number of available spaces determined to be reduced, accordingly.

As described above, the availability inference module 106 can be configured to do this in two-dimensions, but extension is also possible to three-dimensions. Also, the availability inference module 108 may be configured to determine accessibility of available spaces based on turning room typically needed, and allowing a minimum distance, for example of 50cm, at all points between the assuming vehicle of dimensions 2m by 4.8m, and other objects.

In use, the stationary frame filter at step 200 receives the video stream at step 200 from the camera 114 via the control system 100. At step 202, the stationary frame filter 104 discards each image frame that does not add new information, or in embodiments new relevant information, about vehicles in the image frame by reference to the previous image file for which a change was detected, which is stored in the image store 116, using known motion detection algorithms. When an image frame is processed and a change is detected, the stationary frame filter 104 stores the image frame and also provides it to the vehicle detection module 106. At step 204, the vehicle detection module 106 processes the image frame, which includes processing of the image file by the CNN of the vehicle detection module 106, and outputs location information identifying location of each vehicle in the image frame, together with an identifier for each vehicle.

At step 206, the availability inference module 108 receives and stores the data with a timestamp in the data store 118.

At step 208, the availability inference module 108 determines if one or more parking spaces are available by determining how many separate parking spaces of predetermined area are available in the at least one parking zone. This is done by first determining location information for available parking area in the at least one parking region and then determining how many parking spaces of predetermined dimensions fit into the available parking area. If no such parking spaces are available, the availability inference module 108 indicates to the control system 110 according. If any parking spaces are determined to be available, the availability inference module indicates to the control system accordingly 110 the number at step 212.

In the preferred embodiments in which the availability inference module 108 determines accessibility of the available spaces, the availability inference module 108 determines whether the determined parking space can be accessed at step 210, before the number of available spaces is indicated to the control system 110. Thus, the availability inference module 108 determines whether a vehicle of the predetermined length and width can move from the entrance to each of the available spaces through the at least one access zone. The availability inference module 108 then determines that the corresponding number of parking spaces is available based on available spaces and their accessibility. The number of parking spaces available is then output to the control system 110 at step 212. The control system 110 then uses the number to perform at least one action at step 214. For example, the control system 110 may be configured to control an entrance (e.g. a gate) to the parking region to prevent access thereto if there is no available parking space. Alternatively, the control system 110 may control a sign indicating availability to local road users, or make the number available publicly via an API or on a website, for example.

In a variant embodiment applicable where there are at least two parking spaces available, the availability inference module 108 may determine whether a first of the available parking spaces can be reached. Then the availability inference module 108 determines whether a vehicle of the predetermined length and width can move from the entrance to each of the other available spaces through the at least one access zone, in a scenario where the first parking space has been filled. Thus, if filling of the first parking space were to prevent others from being occupied, the available number of spaces can be modified accordingly. Since it may not be possible to know which of available spaces would be occupied first, this may be done on a probabilistic basis. For example, the one of the available spaces closest to the entrance to the car park is likely to be occupied first.

As will be apparent to the skilled person, a video feed from a further camera viewing a further area including the parking region can be used to improve accuracy.

The format of the image frame may be changed, for example at the stationary frame filter 104.

In a variant embodiment, the vehicle detection module 106 may also be configured to determine sign location information in received images for access zone usage signs, for example, one-way signs and two-way signs. The received images can then be processed by an image extraction module, the sign read or interpreted by a machine reading module, and the derived information used in determining whether any parking spaces can be accessed. In an implementation, the image extraction module may be the image extraction module 306 described below and the sign reading module may use optical character recognition technology. The sign reading module may be operatively coupled to the availability inference module 118, to output read sign information to the available inference module 118. The availability inference module 118 may then be configured to also base determination of number of spaces that can be accessed on whether spaces can be accessed in accordance with rules required by the signs. The image extraction module may include a CNN specifically trained to detect such signs. In an alternative implementation, a trained CNN may be configured to process the extracted sign images, without need to extract meaning by a machine reading technology and such meaning maybe by the availability inference module 108.

In further variant embodiments, additionally or alternatively, other signs may be detected, in particular, parking rule signs. For example, parking availability in a particular area may be dependent on particular rules that need interpreting. An area may be reserved for particular people or vehicles or groups of people, such people with disabilities or employed by a particular company. Again, a trained CNN may be used to infer meaning.

Embodiments of the invention will now be described in a vehicle identification system 300, which is coupled to the parking space availability system and shares some elements, those elements that are shared being clear from the following description. Importantly, the vehicle identification system may be implemented without the parking space availability system. In this case, the availability inference module 118 is absent.

Referring again to Figure 1, the vehicle identification system 300 comprises a car image sequence extraction module 301, a vehicle data inference module 302, a vehicle data determination engine 304, a vehicle data datastore 306, a vehicle information server 308, a licence plate identification module 310 and a descriptor database 312.

The image extraction module 301 is configured to receive images from the stationary image filter and location information from the vehicle detection module 106, and to extract a vehicle image of any vehicle that the vehicle detection module 106 has identified in the image provided by the camera 114 using the location information for each identified vehicle. The image extraction module 301 is also configured to generate an identifier (or receive the identifier for the identified vehicle generated by the vehicle identification module 106) for each vehicle image extracted from the image provided by the camera 114. Each identifier and vehicle image may be associated with the timestamp of the image from the camera 114. The image extraction module 301 is configured to provide the extracted vehicle images, respective timestamp and associated vehicle image identifiers to the vehicle identifier inference module 302 all in association with each other.

The vehicle data inference module 302 is configured to determine data about the vehicle corresponding to at least one data type. The at least one data type may include but is not limited to: colour identifier, make identifier, model identifier, markings identifier, tyre pattern identifier, windscreen sticker identifier, for example. Such data is referred to herein as "vehicle data".

The vehicle data inference module 302 includes at least one suitable neural network, for example at least one CNN. The vehicle data inference module 302 may include at least one neural network for each data type for which data on the vehicle is to be obtained. For each data type, the vehicle data inference module 302 is trained to receive input of the extracted vehicle images of vehicles and to process each image to result in vehicle data for the or each data type. Where a data type has a plurality of possible values associated with it, limited in number and the variable is discrete, for example where a model identifier is to be determined, the CNN is trained to output a probability score for each of a plurality of predetermined models. The vehicle data inference model 302 may determine that the vehicle is the model and has a corresponding model identifier dependent on which score is highest, although other processes may be used. The same or similar set up may be used to identify colour and make, for example. For some data types, for example windshield stickers and damage, the CNN may be configured to output a vector, for example of 100 to 500 dimensions.

A vehicle detection module, which in embodiments where the vehicle identification system is coupled to the parking space availability system may be the vehicle detection module 106, is also configured to identify locations of licence plates, as well as vehicles in an image, and to output licence plate location information indicating where in the image the licence plate is. The CNN included in the vehicle detection module 106 is thus preferably trained to do this, and thus to output licence plate location information as well vehicle location information. In variant embodiments, a separate licence plate segmentation module (not shown) is provided working in parallel or in coupled in sequence with the vehicle detection module 106. The licence plate segmentation module is coupled to the stationary frame filter 104 to receive sequential images, and is configured to process the images to identify locations of licence plates and to output location information for the or each licence plate, if any, in the image. The licence plate segmentation module includes a trained neural network, typically a trained CNN, for this purpose.

The image extraction module 301 is configured to receive images and the licence plate information from the vehicle detection module 106, and the timestamp associated with each image, and to extract the licence plate images. The image extraction module 301 is further configured to provide the extracted licence plate images to a licence plate identification module 310. The licence plate identification module 310 is configured to extract the licence plate numbers ("number" being the term conventionally used, but understood to comprise letters and/or numbers) from each received licence plate image using optical character recognition technology. The licence plate identification module 310 is configured to send the identified licence plate characters to the vehicle data determination engine 304, together with the associated timestamp and identifier.

Although not essential to embodiments, the image extraction module 301 is preferably configured to determine whether the licence plate location information indicates if the licence plate is located within the bounds of the identified location of a vehicle. The image extraction module 301 is preferably configured not to extract licence plate numbers that are not within bounds of a vehicle. A region so identified may not in fact be a licence plate and may have been bounded in error; for example the bounded portion may be a road name. Alternatively, the bounded portion may be a licence plate, but not a licence plate attached to a vehicle.

The vehicle data inference module 302 is configured to provide the determined data for the or each data type to the vehicle data determination engine 304. The vehicle data determination engine 304 is configured to match the licence plate number received from the licence plate identification module 310 with the data received from the vehicle data inference module 302. The vehicle data determination engine 304 is configured to store data for each data type in the vehicle data datastore 306. If a record already exists for the licence plate number in the datastore, the vehicle data determination engine 304 stores the determined data in association with that licence plate number. If information is already present on model, make, colour or other fixed attributes of the associated vehicle, that information may be discarded. If the licence plate number is not found, a new record is created.

The vehicle data inference module 302 including one or more of the CNNs may also be configured to generate data identifying each vehicle using the extracted images that is not defined by as predetermined data types and associate such data with the licence plate. Large amount of information can be collected on each vehicle from image frames taken at different angles as a vehicle moves. The techniques used may be analogous to those used in facial recognition technology.

If a licence plate number cannot be extracted from an extracted vehicle image, the vehicle in the image may still be identified by matching of the information determined by the vehicle data inference module 302 with data in the vehicle data datastore 306, where there is already a record for the vehicle and/or licence plate number. The matching may be performed by matching algorithms, which the person skilled in the art would be able to derive. Where the data determined at the inference module 302 for a data type is a vector, the matching algorithms may include determining a proximity between the determined vector and vectors stored for that data type in the vehicle data datastore 306, for example. Thus, data determined by the vehicle data inference module 302 may be used to identify the vehicle without reference to the licence plate. The data stored in the vehicle data datastore 306 serves as a fingerprint for the vehicle.

The vehicle information server 308 stores in a datastore 312 details of a vehicle and its owner. For example, the datastore may store the licence plate number of a vehicle, details, that is, name and contact details, of the owner of the vehicle, the make of the vehicle, the colour of the vehicle, the model of the vehicle. The details stored by the vehicle information server 308 in the datastore 312 are referred to herein a "vehicle/owner details".

The vehicle data determination engine 304 is configured to send requests for vehicle data to the vehicle information server 308, each request including an identified licence plate number. The vehicle information server 308 is configured to respond to each received request by searching for a licence plate number corresponding to the identified licence plate numbers in the datastore 312. If a matching licence plate number is found, information about the vehicle stored in the datastore 312 that corresponds to the matched licence plate number is sent to the vehicle data determination engine 304. The information may include, for example, one or more of the make, model and colour of the vehicle. Other data may usefully be provided relating to other of the data types. If the details of the owner are available, the vehicle data determination engine 304 sends the details to the vehicle data determination engine 304.

There is risk that the licence plate number was not correctly identified by the licence plate recognition engine 310. If the licence plate number was not correctly identified, then either the vehicle information server 308 cannot identify a matching licence plate number, or the vehicle information server 308 identifies a wrong number and sends incorrect information about the vehicle (e.g. an incorrect model identifier).

The vehicle data determination engine 304 is configured to determine whether an identifier of the model of the vehicle received from the vehicle identifier inference module 302 matches a model identifier received from the vehicle information server 308. Other error checking methods may alternatively be used. Also, where a number plate is wrongly identified, in most cases a valid licence plate number would not be identified and so an error message would be returned.

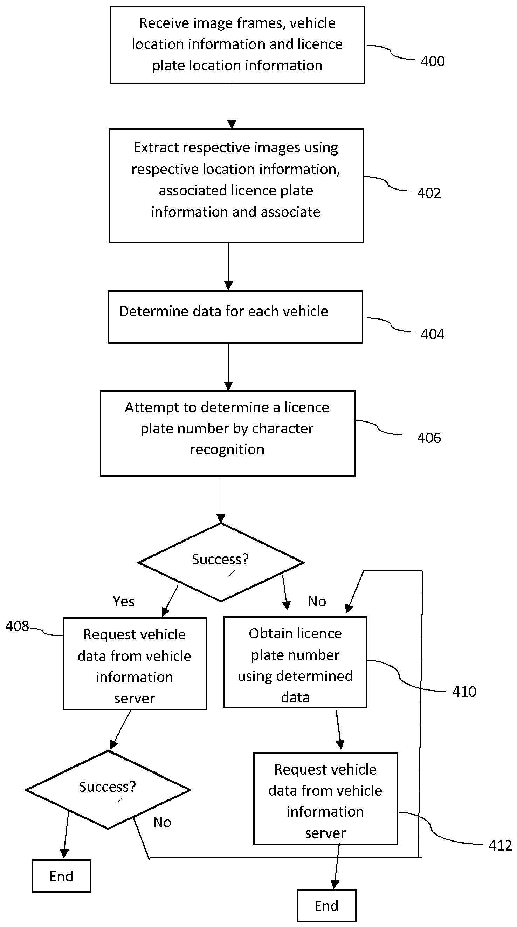

Referring to Figure 3, in use, the image extraction module 301 receives at step 400 the image that has been processed by the vehicle identification module 106 and vehicle location information for each vehicle in the image. According to some embodiments, the image licence plate numbers are also identified, as described above; in other embodiments, location information for the licence plates is provided by a separate licence plate number identification module, as described above. In this case, the image extraction module 301 also receives the location information for the licence places. The image extraction module 301 also receives a timestamp associated with the image.

At step 402, the image extraction module 301 extracts vehicle images from the received image using vehicle location information for the or each vehicle in each image provided by the vehicle identification module 106. The image extraction module 301 also extracts licence plate images from the received images using the licence plate location information. Preferably, the image extraction module 301 ignores location information for licence plates where the location information indicates that the licence plate is not within the bounds of a vehicle, as described above. The image extraction module 301 assigns a respective identifier to each extracted licence plate image and also to the associated extracted vehicle image within the bounds of which the licence plate image is located. Thus, the extracted licence plate image and the extracted vehicle image within the bounds of which the licence plate image is located are associated.

The image extraction module 301 provides the extracted vehicles images, together with the associated timestamp of the image from the camera 114, and an identifier of each of the vehicle images to the vehicle data inference module 302. The vehicle data inference module 302 processes the received vehicle images to determine data for at least one of the data types for the vehicle at step 404. The vehicle data inference module 302 provides the determined data to the vehicle data determination module 304, together with the identifier associated with the received vehicle image.

Before, after or contemporaneously with providing the extracted the or each extracted vehicle image, the image extraction module 301 provides extracted licence plate images to the licence plate recognition module 310. This licence plate recognition module 310 determines a character string from the extracted licence plate image, which may be the licence plate number. The licence plate recognition module 301 then provides the character string to the vehicle data determination engine 304. The module 310 may alternatively provide that a licence plate number cannot be determined, for example because a rule was not met.

If a licence plate is identified, or at least a character string appears to be a licence plate number, the vehicle data determination engine 304 sends a request for vehicle/owner details for the based on the licence plate number to the vehicle information server 308 at step 408. The vehicle information server 308 either returns the vehicle/owner details, or returns an error message if the character string does not match to any stored licence plate number in the store 312.
If either an error message is received or a character string was not determined at step 406, the vehicle data determination engine 304 uses at step 410 the vehicle data received from the vehicle data inference module 302 to search in the vehicle data datastore 306 for corresponding vehicle data that is stored in association with a licence plate number. Where a licence plate number is stored in association with vehicle and is matched to, the licence plate number can thus be identified. The vehicle data determination engine 304 then sends a request at step 412 for vehicle/owner details based on the licence plate number at step 408. The vehicle information server 308 then returns the vehicle/owner details.

In one possible embodiment, the vehicle data determination engine 304 may send a request for vehicle/owner details for an identified vehicle including both the character string and the data corresponding to a determined data type to the vehicle information server 308. The vehicle information server 308 then determines whether a stored licence plate number matches the received character string and stored data associated with that licence plate number matches received vehicle data of at least one datatype, for example model or colour, where such data is stored by the vehicle information server 308 in store 312. If the stored licence plate number matches a stored number and the data matches, the vehicle information server 308 sends vehicle/owner details to the vehicle data determination engine 304. Thus, a check step takes place at the vehicle information server 308.

In another possible embodiment, the vehicle data determination engine 304 determines whether the vehicle data received from the vehicle data inference module 302 confirms that the licence plate is properly associated with the corresponding vehicle. This is done using the received vehicle data by reference to vehicle data associated with the licence plate number stored in the vehicle data datastore 306, where such data is stored. It can then be understood that the licence plate number has been accurately determined since it unlikely that the data such as the model would match otherwise. If the model does not match, the licence plate number is determined to have been incorrectly identified. Thus, a check step takes place at the vehicle data determination engine 304.

Where a licence plate number of a vehicle has been identified and vehicle/owner details retrieved from the vehicle information server 308, the details may indicate information on the owner of the vehicle, for example in connection with parking offences, traffic offences, vehicle monitoring, to aid in letting the owner know that the vehicle has to be used remotely by audio broadcast or display on a display, without limitation. The vehicle information server 308 may be owned by a vehicle registration authority.

The vehicle identification system may also be used to monitor entry and exit of vehicles from particular areas without reference to a licence plate. The vehicle identification system may also be used to identify vehicles with a wrong or concealed licence plate.

Where a licence plate number is correctly identified at step 406, the vehicle data determination engine 304 preferably stores received vehicle data in association with that licence plate number and creates a new record if no record exists. Thus, vehicle data for a vehicle having a particular licence plate number can be built up and updated.

As will be appreciated, although the above described embodiments "vehicles" are referred to, embodiments primarily relate to cars.

Various modifications may be made to the above described embodiments. For example, a blur engine may be provided between various of the above described elements for example following processing of frames by the stationary frame filter 104 and before processing by the vehicle detection CNN 106 and/or the car image sequence extraction module 301. The blur engine is configured to determine peoples faces in the images and to blur them. The blur engine includes a specifically trained neural network, for example a CNN, configured to identify people's faces in images and to blur them. This may be appropriate or required by law to guard people's privacy.

The neural networks referred to herein may be trained using a back propagation method, as will be understood to the person skilled in the art. Other training methods may be used.

Other data besides the data mentioned above may be send between components of the system. For example, the location, e.g. location coordinates, of the camera or an identifier thereof, may be send by the camera with each image frame.

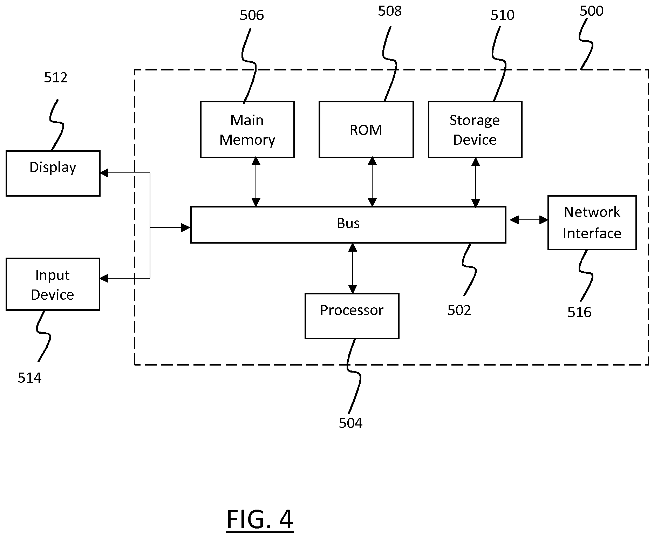

Referring to Figure 4, any of the above-mentioned servers may comprise a system 500 that includes a bus 502 or other communication component for communicating information between components of the system 500. The system includes a processor or processing circuit for processing information. The system also includes a main memory 506, such as a random access memory (RAM) or other dynamic storage device, operatively coupled to the bus 502 for storing information and instructions to be executed by the processor 504. The main memory 506 can also be used for storing intermediate information during execution of instructions by the processor. The system may further include a read only memory (ROM) 508 or other static storage device operatively coupled to the bus 502, for storing static information and instructions for the processor 504. A storage device 510, such as a solid state device, magnetic disk or optical disk, is coupled to the bus 502 for persistently storing information and instructions. The system also includes a network interface 516 by which it can send and receive data.

The system 500 may be coupled via the bus 502 to an electronic display 512, such as a liquid crystal display, for displaying information to a user. An input device, for example a keyboard and cursor control device (e.g. a mouse), or touchscreen, for communicating information and command selections to the processor 504. The processes described herein may be implemented by the computer system 500 in response to the processor 504 executing an arrangement of the instructions contained in the main memory 506. Such instructions can be read into the main memory 506 from another computer-readable storage medium, such as the storage device 510. The processor 502 may be a at least two processors in a multi-processing arrangement configured to execute the instructions in the main memory 506. In alternative implementations hard wired circuity may be used in place of or in combination with software instructions. Implementations are not limited to implementation in hardware or in software or in a combination thereof.

In general, the operations described in this specification can be performed by a data processing apparatus on data stored on one or more computer-readable storage devices or received from other sources. The term "data processing apparatus" or "computing device" or "processing circuit" encompasses all kinds of apparatus, devices, and machines for processing data, including by way of example a programmable processor, a computer, a system on a chip, or multiple ones, a portion of a programmed processor, or combinations of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database control system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program can be deployed to be executed on one computer or on multiple computers that are located at one site or distributed across multiple sites and interconnected by a communication network.

The applicant hereby discloses in isolation each individual feature or step described herein and any combination of two or more such features, to the extent that such features or steps or combinations of features and/or steps are capable of being carried out based on the present specification as a whole in the light of the common general knowledge of a person skilled in the art, irrespective of whether such features or steps or combinations of features and/or steps solve any problems disclosed herein, and without limitation to the scope of the claims.

## Claims

**1.** A method for determining availability of parking spaces, comprising:
receiving image frames from a camera, each image frame comprising a view of an area including at least one parking zone;
determining, for each image frame, by a processing system including a trained neural network layer, location information identifying the location of each vehicle in at least a portion of the view, the determining including processing of the image frame by the trained neural network layer; and
determining, based on the location information and predetermined parking zone location information identifying the location of the at least one parking zone, availability information indicative of availability of parking spaces in the at least one parking zone.

**2.** The method of claim 1, wherein the determining the availability information is performed independently of any predefined capacity of the at least one parking zone.

**3.** The method of claim 1 or claim 2, wherein the determining the availability information comprises:
determining space available in the at least one parking zone based on the parking zone location information and the location information for each vehicle;
determining a number of vehicles of predetermined size that can be accommodated by the determined space, wherein the availability information is based at least on the number.

**5.** The method of claim 4, further comprising determining the space available using dimension information for the view.

**6.** The method of any one of the preceding claims, further comprising automatically determining the parking zone location information.

**7.** The method of any one of the preceding claims, wherein the area includes at least one access zone, further comprising determining whether an object of predetermined size can access the or each parking space determined to be available in the at least one parking zone via the at least one access zone using access zone location information identifying the location of the at least access zone in the image data, wherein the availability information is based at least on whether the or each parking space is accessible.

**8.** The method of claim 5, wherein the determining whether a vehicle can access the or each determined space comprises determining whether a vehicle of predetermined size can move through the at least one access zone to the or each parking space determined to be available.

**9.** The method of claim 7 or claim 8, further comprising automatically determining the at least one access zone location information.

**10.** The method of any one of the preceding claims, further comprising performing at least one action using the availability information.

**11.** The method of claim 10, wherein the at least one action comprises one of:
controlling access (for example by controlling a gate) to a parking region including the at least one access zone and the at least one parking zone to prevent parking if the availability information indicates that no space is available;
controlling an electronic sign configured to indicate whether parking spaces are available in the at least one parking zone;
making the availability information available via a website or application.

**12.** The method of any one of the preceding claims, wherein the methods described above are performed at a server means.

**13.** A computer program product embodied on a computer readable medium, which, when executed by a processing means, is configured to cause performance of the method of any one of the preceding claims.

**14.** Apparatus comprising:
A processing means;
A memory means having computer program code stored thereon, wherein the processing means is configured, together with the memory means and the computer program code, to cause the apparatus to perform the method of any one of claims 1 to 14.
